# NEUE EUROPÄISCHE PATENTSCHRIFT

(11) **EP 1 483 131 B2**
(45) Veröffentlichungstag und Bekanntmachung des Hinweises auf die Entscheidung über den Einspruch: **17.06.2009**
(45) Hinweis auf die Patenterteilung: 10.08.2005
(21) Anmeldenummer: 03743325.7
(22) Anmeldetag: 25.02.2003
(51) Int. Cl.: B60N 2/20, B60N 2/36, B60N 2/22, B60N 2/02

(54) **KRAFTFAHRZEUGSITZ MIT EINER ELEKTRISCH POSITIONSVERÄNDERBAREN RÜCKENLEHNE**
AUTOMOTIVE SEAT WITH A BACKREST WHOSE POSITION CAN BE ELECTRICALLY ADJUSTED
SIEGE DE VEHICULE AUTOMOBILE POURVU D'UN DOSSIER DONT LA POSITION PEUT ETRE MODIFIEE ELECTRIQUEMENT

(30) Priorität: 05.03.2002 DE 10209759
(43) Veröffentlichungstag der Anmeldung: 08.12.2004
(73) Patentinhaber: Johnson Controls GmbH, 51399 Burscheid (DE)
(72) Erfinder: BOUDINOT, Richard, 51371 Leverkusen (DE)
(74) Vertreter: Schwöbel, Karl T.
(86) Internationale Anmeldenummer: PCT/EP2003/001889
(87) Internationale Veröffentlichungsnummer: WO 2003/074316

(56) Entgegenhaltungen:
- DE- - 2 552 787
- DE-A- 19 630 189
- DE-A1- 3 925 837
- DE-A1- 19 737 269
- DE-A1- 19 737 269
- DE-A1- 19 836 060
- DE-A1- 19 944 964
- DE-C1- 19 916 709
- DE-U1- 29 718 584
- DE-U1- 29 907 041
- FR- - 2 772 318
- JP- - 2000 253 942
- US-A- 3 062 584
- US-A- 5 203 608
- US-A- 5 806 932
- US-A- 5 918 940
- US-A- 6 106 067
- US-B1- 6 315 361
- US-B2- 6 270 141
- KATALOG "ELEKTRO-ANTRIEBE 1997/1998" VON ITT AUTOMOTIVE, S.37

## Beschreibung

Die Erfindung betrifft einen Kraftfahrzeugsitz, insbesondere Rücksitz oder Rücksitzbank, mit einem Sitzteil und mit einer Rückenlehne, die eine mit einem elektrischen Antrieb bewirkte Umklappfunktion aufweist, wobei die Umklappfunktion ein Umklappen der Rückenlehne oder eines Rückenlehnenteils relativ zum Sitzteil bewirkt.

Aus der Druckschrift OE 197 37 269 C2 ist ein Kraftfahrzeugsitz bekannt, bei dem die Neigung der Rückenlehne durch einen Elektroantrieb verstellbar ist, um verschiedene Sitzpositionen zu ermöglichen. Dieser Kraftfahrzeugsitz ist mit einem elektrisch angetriebenen Drehverstellbeschlag versehen, dessen einer Beschlagteil fest mit einem Sitzteilrahmen und dessen anderer Beschlagteil fest mit dem Rückenlehnenrahmen verbunden ist, wobei der Rückenlehnenrahmen um eine horizontale Neigungsverstellachse elektrisch neigungseinstellbar und zusätzlich dazu mechanisch bzw. manuell klappbar ausgebildet ist.

Ein anderer Kraftfahrzeugsitz ist in der Druckschrift OE 199 16 709 C1 gezeigt und beschrieben. Dieser Kraftfahrzeugsitz, insbesondere Rücksitz oder Rücksitzbank, ist mit einem Sitzteil und einer Rückenlehne versehen, die auf den Sitzteil klappbar ist, welcher um eine in seinem vorderen Bereich angeordnete Querachse mit aufliegender Rückenlehne in eine im Wesentlichen aufrechte Position überführbar ist. Dieser Sitz weist eine automatische Faltung auf, bei der sowohl das Klappen der Rückenlehne als auch das Aufrichten des Sitzteils sowie die Rücküberführung des Sitzes in seine Gebrauchslage durch von einer Motorgetriebeeinheit angetriebene Seile erfolgt. Dabei ist dieser Sitz sowohl vom Fahrzeuginnenraum als auch vom Kofferraum aus bedienbar. Dieser vorwiegend mechanische Antrieb ist jedoch konstruktiv aufwändig und in seiner Verstellfunktion begrenzt.

Der Druckschrift US 3 062 584 A, welcher den nächstliegenden stand der Technik darstellt, offenbart alle Merkmale des Oberbegriffs des unabhängiges Anspruchs 1.

Der Erfindung liegt die Aufgabe zugrunde, einen gattungsgemäßen Kraftfahrzeugsitz zu schaffen, bei dem die Neigungsverstellung und das Umklappen in einfacher und bequemer Weise erfolgen kann.

Diese Aufgabe wird mit einem Fahrzeugsitz gemäß Patentanspruch 1 gelöst. In den Unteransprüchen sind vorteilhafte Weiterbildungen der Erfindung enthalten.

Durch die Erfindung, ist es ohne eine aufwendige mechanische Konstruktion möglich, sowohl eine Neigungsverstellung der Rückenlehne zu erreichen, um eine bequeme Sitzposition einzustellen, als auch eine Umklappung zu erreichen, um das Kofferraumvolumen zu erhöhen. Erfindungsgemäß sind jeweils unterschiedliche Geschwindigkeiten einstellbar, wodurch eine erste Geschwindigkeit der Neigungsverstellung und eine - von der ersten abweichende - zweite Geschwindigkeit für das Umklappen der Rückenlehne dem elektrischen Antrieb zugeordnet werden kann.

Durch verschiedene Verstellgeschwindigkeiten des elektrischen Antriebes ist es möglich, dass in vorteilhafter Weise die Neigungs-Verstellfunktion der Rückenlehne mit einer langsameren Geschwindigkeit als die der Umklappfunktion durchgeführt wird. Die langsame Geschwindigkeit hat den Vorteil, dass die Rückenlehnenneigung genau eingestellt werden kann, während die höhere Geschwindigkeit ein schnelles Durchführen der Umklappfunktion bewirkt.

Wenn jede Rückenlehnen-Verstellfunktion, d.h. Umklapp- und Neigungs-Verstellfunktion, jeweils eine eigene Verstellcharakteristik aufweist, ist es zum Beispiel möglich, eine Verstellung in der Umklappfunktion mit niedrigem Drehmoment und eine Verstellung in der Neigungs-Verstellfunktion mit hohem Drehmoment durchzuführen. Dies erhöht einerseits die Sicherheit, weil zum Beispiel bei niedrigem Drehmoment in der Umklappfunktion Personen durch die geringe Kraft einer drückenden Rückenlehne nicht zu Schaden kommen können, und andererseits kann die Neigung der Rückenlehne mit höherem Drehmoment auch bei Belastung durch eine Person eingestellt werden. Dabei muß nicht dem niedrigeren Drehmoment eine langsame und dem höheren Drehmoment eine höhere Geschwindigkeit zugeordnet werden. Es ist ganz im Gegenteil sinnvoll, dass bei höherer Geschwindigkeit in der Umklappfunktion das Drehmoment niedrig ist und umgekehrt. Hierbei kann das Verändern des Drehmomentes bzw. der Motordrehzahl auch durch verschiedene Motorwicklungen erfolgen.

In einer vorteilhaften Weiterbildung der Erfindung ist vorgesehen, dass die Neigung der Rückenlehne in der Neigungs-Verstellfunktion schrittweise durch den elektrischen Antrieb veränderbar ist. Hierdurch kann eine bestimmte Position - insbesondere mit einem Schrittmotor- im Vergleich zu einer stufen losen Verstellung einfacher und bequemer eingestellt werden.

Kostengünstig ist es, wenn der elektrische Antrieb einen für beide Verstellfunktionen gemeinsamen Elektromotor aufweist, wobei grundsätzlich zwei Motoren vorhanden sein können, zum Beispiel ein erster, stärkerer Schrittmotor für die Neigungs-Verstellfunktion und ein zweiter, kleinerer Gleichstrommotor für die Umklappfunktion.

Durch eine elektronische oder mechanische Drehmomentbegrenzung in der Umklappfunktion, die in einer weiteren vorteilhaften Ausgestaltung der Erfindung vorgesehen ist, bei der bei Überschreitung eines unzulässigen, definierten Wertes im einfachsten Fall der elektrische Antrieb infolge einer Motorstrommessung abgeschaltet wird, werden Personen oder Gegenstände in einfacher Weise vor umklappenden Rückenlehnen zuverlässig geschützt. Diese Drehmomentbegrenzung erweist sich als besonders günstig, wenn Einkaufstüten mit bestimmten Lebensmitteln oder andere empfindliche Gegenstände auf dem Rücksitz vergessen worden sind und bei einer Bedienung der Umklappfunktion vom Kofferraum aus nicht gesehen werden können.

Erfindungsgemäß ist der Fahrzeugsitz mit einem oder mehreren Sitzbelegungssensoren versehen die, die Sicherheit zusätzlich erhöhen. Dabei wird eine auf dem Rücksitz sitzende Person erkannt und sofort die Umklappfunktion automatisch abgeschaltet. Hierbei ist der Sitzbelegungssensor dann derart mit dem elektrischen Antrieb über eine Steuereinheit funktionell verbunden, dass bei Sitzbelegung ein Sperren der Umklappfunktion und keine Sperrung der Neigungs-Verstellfunktion erfolgt. Dies kann zweckmäßigerweise durch einen Umschalter erreicht werden.

In einer bevorzugten Ausführungsform ist vorgesehen, dass in der Umklappfunktion der elektrische Antrieb durch einen ersten Bedienschalter vom Fahrgastraum - vorzugsweise vom jeweiligen Sitz - aus und getrennt durch einen zweiten Bedienschalter vom Kofferraum aus betätigbar ist und in der Neigungs-Verstellfunktion vom jeweiligen Sitz aus betätigbar ist. Ein Umklappen ist dann bequem möglich, auch wenn das Fahrzeug in einer Tiefgarage zwischen Säulen geparkt ist, da die Bedienung vom Kofferraum aus leicht erfolgen kann.

Von jeder Stelle und auch außerhalb des Fahrzeuges ist ein bequemes Aktivieren der Umklappfunktion möglich, wenn gemäß einer weiteren vorteilhaften Ausgestaltung der Erfindung eine drahtlose Fernbedienung vorgesehen ist, die als Funk- oder Infrarotsteuerung in bekannter Weise ausgeführt sein kann. Ein Aktivieren kann auch durch ein Spracherkennungsmodul erfolgen.

Günstig ist es auch, wenn der elektrische Antrieb eine Motor- und Getriebekombination ist. Durch eine Motor- und Getriebekombination - insbesondere in kompakter Bauweise - kann das Drehmoment in geeigneter Weise bedarfsweise erhöht oder die Geschwindigkeit der Motordrehzahl an die erforderliche Antriebsgeschwindigkeit angepasst werden.

Vorteilhaft ist es auch, wenn der Elektromotor des elektrischen Antriebs - durch Verändern der Motorleistung - zwei Geschwindigkeiten aufweist.

Die Erfindung wird an Hand eines Ausführungsbeispiels näher erläutert, in dem weitere Vorteile der Erfindung und weitere Merkmale näher beschrieben sind.

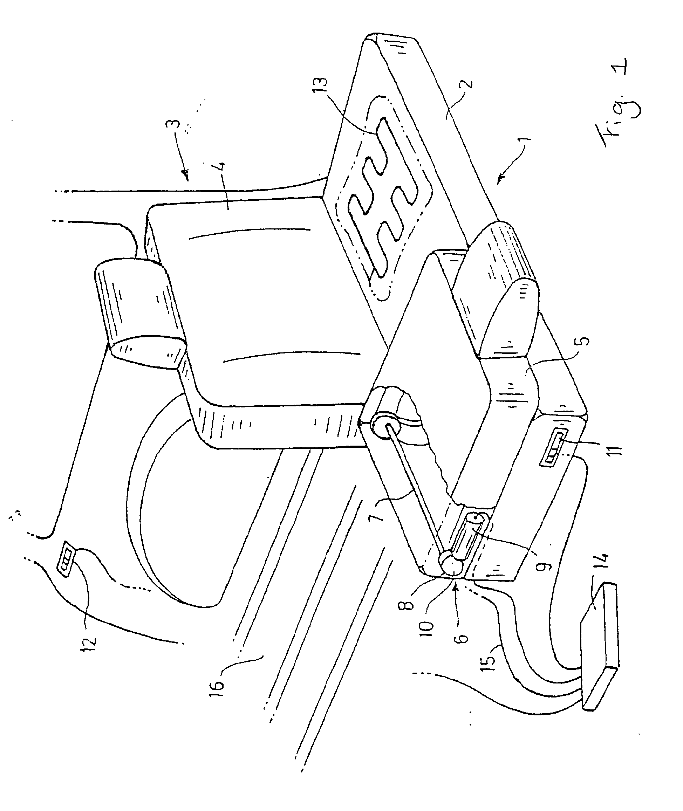

Die einzige Zeichnungsfigur zeigt eine perspektivische Darstellung eines Fahrzeugsitzes.

Die Figur zeigt einen Fahrzeugsitz 1, der als Rücksitzbank mit einem für mehrere Rückenlehnenteile gemeinsamen Sitzteil 2 ausgebildet ist. Die Rücksitzbank weist eine zweigeteilten Rückenlehne 3, auf die ein erstes Rückenlehnenteil 4 und ein zweites, kleineres Rückenlehnenteil 5 aufweist. Zur Positionsveränderung des zweiten Rückenlehnenteils 5 ist in der Nähe der Drehachse 7 der Rückenlehne 3 und an dem Rückenlehnenteil 5 ein elektrischer Antrieb 6 angeordnet, wobei dieser in der Nähe eines Endes 8 - vorzugsweise das jeweils äußerste in Bezug auf das Lehnenteil - der Drehachse 7 positioniert ist. Der elektrische Antrieb 6 besteht aus einem Motor 9 und einem Getriebe 10, wobei das Getriebe 10 unmittelbar mit der Drehachse 7 mechanisch verbunden ist. Die Motordrehachse liegt platzsparend senkrecht zur Drehachse 7, wobei der Motor mit zwei Geschwindigkeiten steuerbar ist.

Zur elektrischen Betätigung der Rückenlehne bzw. eines oder mehrerer Rückenlehnenteile 4, 5 sind Betätigungsschalter 11 und 12 vorgesehen.

In dem gezeigten Ausführungsbeispiel ist zwar nur ein elektrischer Antrieb 6 für das Rückenlehnenteil 5 gezeigt, analog hierzu ist auch das andere Rückenlehnenteil 4 mit einem weiteren nicht gezeigten erfindungsgemäßen elektrischen Antrieb versehen.

Erfindungsgemäß weist der elektrische Antrieb 6 zwei unterschiedliche Verstellgeschwindigkeiten auf, wobei die Verstellgeschwindigkeit des elektrischen Antriebes 6 derart veränderbar ist, dass für eine Neigungs-Verstellfunktion und für eine Umklappfunktion jeweils eine unterschiedliche Geschwindigkeit einstellbar ist, so dass sowohl eine elektrische Neigungsverstellung der Rückenlehne 3 möglich ist, um eine bequeme Sitzposition einzustellen, als auch eine elektrische Umklappung möglich ist, um das Kofferraumvolumen zu erhöhen, wobei wie in der Figur dargestellt ist, der Kofferraum 16 durch ein Umklappen des Rückenlehnenteils 5 vergrößert worden ist.

Erfindungsgemäß sind also jeweils unterschiedliche Geschwindigkeiten einstellbar, wodurch eine erste Geschwindigkeit für der Neigungsverstellung und eine - von der ersten abweichende - zweite Geschwindigkeit für das Umklappen der Rückenlehne dem elektrischen Antrieb 6 zugeordnet werden kann.

Der Motor 9 weist daher zwei Geschwindigkeiten auf, eine erste, langsame, zur Verstellung der Lehnenneigung und eine zweite, schnelle, zum Umklappen der Rückenlehne 3 bzw. eines oder mehrerer der Rückenlehnenteile 4 und/oder 5. Zusätzlich kann der elektrische Antrieb 6 mit zwei Verstellcharakteristiken versehen sein, eine erste mit hohem Drehmoment, zum Verstellen der Lehnenneigung und eine zweite, mit niedrigem Drehmoment, zum Umklappen.

Der mit der Motor-Getriebe-Kombination, bestehend aus dem Motor 9 und dem Getriebe 10, ausgeführte elektrische Antrieb 6 ist mit zwei verschiedenen Verstellgeschwindigkeiten betreibbar. In der Neigungs-Verstellfunktion der Rückenlehne 3 bzw. hier angenommen des Rückenlehnenteils 4, kann maximal eine im Wesentlichen senkrechte Lehnenposition ausgehend von einer nach hinten geneigten Position erreicht werden.

Ein nach hinten Neigen des Rückenlehnenteils 4 ausgehend von der in der Figur gezeigten Position erfolgt nur mit einer relativ langsamen Geschwindigkeit, um eine möglichst angenehme Lehnen-Einstellung zu erreichen. Ohne weiteres kann auch in der Neigungs-Versteilfunktion eine Grob-Einstellung mit einer etwas schnelleren Geschwindigkeit als in einer Fein-Einstellung vorgesehen sein. Die etwas höhre Geschwindingkeit kann durch längeres Drücken eines Bedienschalters bzw. eines Bedientasters einstellbar sein, wie beim "Vorspulen" in CD-Spielern oder beim Verstellen der Uhrzeit in Digitaluhren üblich ist. Die langsame Geschwindigkeit hat den Vorteil, dass die Rückenlehnenneigung genau eingestellt werden kann.

Die Neigungs-Verstellfunktion weist eine Verstellcharakteristik mit hohem Drehmoment auf. Die Neigung der Rückenlehne 3 mit höherem Drehmoment kann sanfter und genauer eingestellt werden als mit niedrigem Drehmoment. Es ist durchaus sinnvoll, dass bei niedriger Geschwindigkeit in dieser Funktion das Drehmoment relativ hoch ist. Man kann sich dann von einer sehr nach hinten geneigten Sitz-Position praktisch nach vorne ohne Kraftanstrengung in eine aufrechte Position schieben bzw. bewegen lassen. Das Verändern des Drehmomentes kann auch durch Zuschalten einer weiteren Motorwicklung bzw. durch Verändern der magnetischen Eigenschaften des Motors 9 erfolgen.

Eine Neigung der Rückenlehne 3 in der Neigungs-Versteilfunktion kann stufenlos oder insbesondere schrittweise durch den elektrischen Antrieb 6 verändert werden, wobei im letzten Fall der Motor 9 ein Schrittmotor ist.

Eine höhere Verstellgeschwindigkeit - zumindest höher im Vergleich zu einer von mehreren Geschwindigkeiten für die Rückenlehne 3 (siehe oben "Vorspulen" in CD-Spielern) - kann in der Umklappfunktion erreicht werden, wobei die höhere Geschwindigkeit ein gewünschtes schnelles Durchführen des Umklappens bewirkt. Die Umklappfunktion beschränkt sich nicht nur auf das nach vorne Kippen sondern umfasst auch eine automatische Rückführung des Sitzes in seine Gebrauchslage, die der Stellung des Rückenlehnenteils 4 in der Figur entspricht.

In der Umklappfunktion im Vergleich zur Neigungs-Verstellfunktion ist grundsätzlich nur ein relativ niedriges Drehmoment erforderlich, was aber auch aus Sicherheitsgründen vorteilhaft ist. Bei niedrigem Drehmoment in der Umklappfunktion können Personen, insbesondere Kinder, durch die geringe Kraft einer drückenden Rückenlehne nicht verletzt werden. Die Bewegung der Rückenlehne 3 in der Umklappfunktion weist jedoch - im Gegensatz zu der in der Neigungs-Verstellfunktion - eine höherer Geschwindigkeit auf, damit der Kofferraum möglichst schnell vergrößert wird.

Durch eine elektronische Drehmomentbegrenzung in der Umklappfunktion wird bei der Überschreitung eines unzulässigen, definierten Wertes der Motor 9 abgeschaltet, wobei der Motorstrom gemessen und ein Signal bei unzulässigem Strom an eine Steuereinheit 14 weitergegeben wird. Hierfür kann aber auch ein Motor-Schutzschalter oder dergleichen vorgesehen sein. Auf diese Weise werden auch Kleinkinder in einfacher Weise vor umklappenden Rückenlehnen ohne zusätzliche Sensoren geschützt. Um die Sicherheit zusätzlich zu erhöhen, sind in dem dargestelltem Ausführungsbeispiel mehreren Sitzbelegungssensoren vorgesehen, wovon nur ein Sitzbelegungssensor 13 dargestellt ist. In dem gezeigten Ausführungsbeispiel ist ein weiterer Sitzbelegungssensor im Bereich der kleineren Rückenlehne 5 angeordnet, der ebenfalls, wie auch der gezeigte Sitzbelegungssensor 13, in dem Sitzteil 2 integriert ist. Ohne weiteres können im Bereich der größeren Rückenlehne 3 in dem Sitzteil 2 zwei Sitzbelegungssensoren angeordnet sein, so dass insgesamt drei gleichmässig verteilte Sitzbelegungssensoren vorhanden sind, entsprechend der maximalen Personenzahl, für die ein Rücksitz üblicherweise vorgesehen ist.

Bei dem gezeigten Ausführungsbeispiel wird die Sicherheit durch eine Kombination von Drehmomentbegrenzung und Sitzbelegungssensoren 13 erhöht, wobei durch einen oder mehreren Sitzbelegungssensoren 13 eine oder mehrere auf dem Rücksitz bzw. Rücksitzbank sitzenden Personen erkannt und sofort ein hinterer Schalter 12 gesperrt und ein vorderer Schalter 11 auf Neigungsfunktion umgeschaltet wird.

Der Sitzbelegungssensor 13 sowie alle nicht gezeigten Sitzbelegungssensoren sind mit dem elektrischen Antrieb 6 über die Steuereinheit 14 funktionell verbunden, wobei die Steuereinheit 14 derart ausgeführt ist, dass bei Sitzbelegung ein Sperren der Umklappfunktion und keine Sperrung der Neigungs-Verstellfunktion erfolgt. Die Steuereinheit 14 ist mit den Bedienschaltern 11, 12 über Leitungen elektrisch aber auch über eine Steuerleitung 15 mit den Sitzbelegungssensoren 13 verbunden. Die Bedienschaltern 11, 12 werden später näher beschrieben. Die Leitungen können auch durch eine Bus-Leitung ersetzt werden und müssen nicht Einzelleitungen sein, wie in der Figur gezeigt ist.

In dem Ausführungsbeispiel weist der elektrische Antrieb 6 für beide Verstellfunktionen einen gemeinsamen Elektromotor 9 auf. Grundsätzlich können zwei Motoren vorhanden sein, zum Beispiel ein erster, stärkerer Schrittmotor für die Neigungs-Verstellfunktion und ein zweiter, kleinerer Gleichstrommotor für die Umklappfunktion.

Der Elektromotor 9 des elektrischen Antriebs 10 weist in diesem Fall durch Verändern der Motorspannung zwei Geschwindigkeiten auf, wobei eine Geschwindigkeit für das Umklappen und die andere für das Neigen vorgesehen ist.

Der elektrische Antrieb 6 ist in dem gezeigten Ausführungsbeispiel eine Motor- und Getriebekombination, wobei das Getriebe 10 (vgl. Bzz. 8) in der Nähe des Elektromotors 9 angeordnet ist und keine Seile und Seiltrommeln oder andere konstruktiv aufwendige Mittel aufweist. Durch die Motor- und Getriebekombination in dieser kompakten Bauweise kann das Drehmoment in geeigneter und einfacher Weise an das Gewicht oder die Verstellkraft des Rückenlehnenteils 4 oder 5 oder an die Geschwindigkeit des Motors 9 bzw. an die gewünschte Antriebsgeschwindigkeit angepasst werden.

Die Motorwelle des Elektromotors 9 treibt ein Zahnradgetriebe an, welches mit reduzierter Drehzahl im Vergleich zur Drehzahl der Motorwelle die Rückenlehne 3 bzw. ein Rückenlehnenteil 4 oder 5 bewegt.

Das Getriebe 10 ist weiterhin als Umlenkgetriebe mit 90° Umlenkwinkel ausgebildet, wie durch die senkrechte Motoranordnung in Bezug auf die Achse 7 zu erkennen ist.

Das Ausführungsbeispiel bezieht sich zwar auf einen Rücksitz, es kann aber genau so gut auf einen Vordersitz übertragen werden, um einen schmalen aber langen Kofferraum zu ermöglichen, in dem zum Beispiel lange, schmal verpackte Regale auf der Rückfläche des umgeklappten Beifahrersitzes, auf der Rückfläche des umgeklappten Rückenlehnenteils und im eigentlichen Kofferraum 16 selbst transportiert werden können. Auch der Fahrersitz kann mit diesen Funktionen ausgestattet sein, um eine großflächige Schlafgelegenheit bieten zu können, wobei dann alle Rücksitzlehnen und Vordersitzlehnen umgeklappt sind. Zusätzlich zu den Funktionen bezüglich der Rückenlehne, insbesondere der Umklappfunktion, können ein oder mehrere Sitze elektrisch verschiebbar sein und/oder andere elektrische Funktionen umfassen, um zum Beispiel eine möglichst gleichmässige bzw. lückenlose Schlaffläche bieten zu können.

Die elektrische Verstellung ermöglicht, wie bereits angedeutet, erhebliche Variationsmöglichkeiten des Fahrzeug- und Kofferraumes in bequemer Weise, was dem Trend nach Vielfachnutzung eines Fahrzeuges gerecht wird. Insbesondere können in einer elektrischen Steuerung einprogrammierte Tisch- oder Arbeitsplatzfuktionen realisiert sein, wobei, wie bereits üblich, die Rückenlehnenrückseite als Tischfläche nutzbar ist oder aber auch Transport- oder Schlaffunktionen realisiert sein können.

Es können für die Umklappfunktion der in der Figur gezeigten Rückenlehenteile 4 und 5 im einfachsten Fall Schalter oder ein Umschalter oder beides vorhanden sein, mit denen nur das kleinere Rückenlehneteil 5 oder nur das größere Rückenlehnenteil 4 oder beide Rückenlehnenteile 4 und 5 gleichzeitig umgeklappt werden können. Eine Bedienung kann aber auch vom Armaturenbrett aus, insbesondere durch ein menügeführtes Touchpanel erreicht werden oder aber von einer menügeführten drahtlosen Fernbedienungen aus erfolgen.

Das elektrische Umklappen ist grundsätzlich nicht nur auf ein nach vorne Klappen beschränkt, sondern kann auch ein elektrisches nach hinten Klappen umfassen, was im Fall einer Schlafposition sinnvoll ist.

In dem gezeigten Ausführungsbeispiel ist jedoch nur ein nach vorne Klappen vorgesehen, wobei in der Umklappfunktion der elektrische Antrieb 6 durch einen ersten Bedienschalter 11 vom Sitz aus oder durch einen zweiten Bedienschalter 12 vom Kofferraum 16 aus. betätigbar ist. In der Neigungs-Verstellfunktion ist nur eine Bedienung vom Sitz, insbesondere vom vorderen Sitzbereich aus möglich.

Zum Bedienen der Rückenteile 4 und 5 sind in diesem Ausführungsbeispiel also insgesamt drei Bedienschalter vorhanden, nämlich ein erster Bedienschalter 11, der in dem Sitzteil 2 auf der rechten Seite angeordnet ist und zum Verstellen der Sitzneigung oder für das Umklappen des kleineren Rückenlehnenteils 5 dient, ein zweiter Bedienschalter 12, der im Kofferraum 16 angeordnet und zum Umklappen eines oder mehrerer Rückenlehnenteile 4 und/oder 5 vorgesehen ist und ein dritter nicht gezeigter

Bedienschalter auf der linken Seite des Sitzes zum analogen Verstellen bzw. Umklappen des größeren Rückenlehnenteiles 4.

Die Bedienschalter 11, 12 weisen jeweils außerdem zwei Richtungsfunktionen, d.h. nach vorne Klappen oder Aufrichten bzw. nach vorne Neigen oder nach hinten Neigen, wobei die Richtungsfunktion bei der Umklappfunktion nicht erforderlich ist, wenn an die Steuereinheit 14 angeschlossene Endstellungssensoren vorhanden sind, so dass durch einfaches Drücken eines der Bedienschalter 11 oder 12 die Rückenlehnenteile 4 und/oder 5 die Drehrichtung des Elektromotor 6 automatisch bestimmt und eingestellt werden kann.

Ein Umklappen bei Bedienung vom Kofferraum aus ist dann besonders bequem, wenn das Fahrzeug in einer Tiefgarage zwischen Säulen geparkt ist oder wenn man einfach zufällig vor dem Kofferraum steht.

Durch eine nicht dargestellte drahtlose Fernbedienung, die als Funk- oder Infrarotsteuerung in bekannter Weise ausgeführt sein kann, können die Rücksizteile 4 und/oder 5 von jeder Stelle und auch außerhalb des Fahrzeuges in analoger Weise umgeklappt werden.

Der erfindungsgemäße Fahrzeugsitz kann eine Rücksitzbank mit einem Teilungsverhältnis der Lehnenteile von 40 % - 60 %, 50 % - 50 %, 100 % und anderen Werten sein. In den gezeigten Ausführungsbeispiel weist das Rückenlehnenteil 5, wie zu sehen ist, etwa 40% der Gesamtbreite der Rückenlehne 3 und das Rückenlehnenteil 4 daher etwa 60% auf.

In diesem Ausführungsbeispiel ist zwar ein gemeinsamer Elektromotor vorhanden, prinzipiell können aber, wie bereits erläutert, zwei Motoren vorhanden sein, einer zum Beispiel für die Neigungs-Verstellfunktion und ein weiterer für die Umklappfunktion.

In der Neigungs-Verstellfunktion können außerdem verschiedene Neigungswinkel stufenlos eingestellt werden, dagegen sind in der Umklappfunktion in dem gezeigten Ausführungsbeispiel nur zwei Endpositionen möglich, nämlich eine umgeklappte (siehe Rückenlehne 5) und eine zum Sitzen geeignete Lehnen-Stellung (siehe Rückenlehne 4), d. h. im Wesentlichen hochstehende Lehnenposition bzw. Gebrauchslage. Die nicht geklappte Endposition in der Gebrauchslage kann entweder immer eine im Wesentlichen hochstehende Lehnenposition sein, so dass die Rückenlehne immer die gleiche Ausgangslage nach einem Umklappvorgang hat, oder aber auch eine vorher eingestellte, stärker nach hinten geneigte Position sein, so dass eine individuell eingestellte Neigung nach einem Umklappvorgang beibehalten und nicht neu eingestellt werden muss. Entsprechendes kann durch die Steuereinheit 14 realisiert sein.

## Patentansprüche

1. Fahrzeugsitz (1), insbesondere Rücksitz oder Rücksitzbank, mit einem Sitzteil (2) und mit einer Rückenlehne (3), die eine mit einem elektrischen Antrieb bewirkte Umklappfunktion aufweist, wobei die Umklappfunktion ein Umklappen der Rückenlehne (3) odereines Rückenlehnenteils (4, 5) relativ zum Sitzteil (2) bewirkt,
**dadurch gekennzeichnet, dass**
der elektrische Antrieb (6) eine Neigungs-Versteltfunktion aufweist, wobei die Verstellgeschwindigkeit des elektrischen Antriebes (6) derart veränderbar ist, dass für die Neigungs-Verstellfunktion und für die Umklappfunktion jeweils eine unterschiedliche Geschwindigkeit einstellbar ist, und das Sitzteil (2) mindestens einen Sitzbelegungssensor (13) aufweist und der Sitzbelegungssenor (13) derart mit dem elektrischen Antrieb (6) funktionell verbunden ist, dass bei Sitzbelegung die Umklappfunktion gesperrt ist, während die Neigungs-Verstellfunktion nicht gesperrt ist.

2. Fahrzeugsitz nach Anspruch 1,
**dadurch gekennzeichnet, dass**
der Antrieb (6) zwei Verstellgeschwindigkeiten aufweist, wobei eine höhere Geschwindigkeit für die Umklappfunktion und eine niedrigere Geschwindigkeit für die der Neigungs-Verstellfunktion vorgesehen ist.

3. Fahrzeugsitz nach einem der vorhergehenden Ansprüche,
**dadurch gekennzeichnet, dass**
die Umklappfunktion und die Neigungs-Verstellfunktion jeweils eine eigene Verstellcharakteristik aufweisen.

4. Fahrzeugsitz nach einem der vorhergehenden Ansprüche,
**dadurch gekennzeichnet, dass** die Neigung der Rückenlehne (3) in der Neigungs-Verstellfunktion schrittweise - insbesondere mit einem Schrittmolor - durch den elektrischen Antrieb (6) veränderbar ist.

5. Fahrzeugsitz nach einem der vorhergehenden Ansprüche,
**dadurch gekennzeichnet,**
**dass** der elektrische Antrieb (6) einen für alle Verstellfunktionen gemeinsamen Elektromotor (9) aufweist.

6. Fahrzeugsitz nach einem der vorhergehenden Ansprüche,
**dadurch gekennzeichnet, dass**
der elektrische Antrieb (6) eine elektronische oder mechanische Drehmomentbegrenzung aufweist.

7. Fahrzeugsitz nach einem der vorhergehenden Ansprüche,
**dadurch gekennzeichnet, dass** in der Umklappfunktion der elektrische Antrieb (6) durch einen ersten Bedienschalter (11) vom Fahrgastinnenraum - vorzugsweise vom Sitz und/oder vom Armaturenbrett - aus, durch einen zweiten Bedienschalter (12) vom Kofferraum aus betätigbar ist und in der Neigungs- Verstellfunktion vom Sitz - insbesondere vom vorderen Sitzbereich - aus betätigbar ist.

8. Fahrzeugsitz nach einem der vorhergehenden Ansprüche,
**dadurch gekennzeichnet, dass**
die Rückenlehne (3) oder ein oder mehrere Rükkenlehnenteile (4, 5) durch eine drahtlose Fernbedienung umklappbar sind.

9. Fahrzeugsitz nach einem der vorhergehenden Ansprüche,
**dadurch gekennzeichnet, dass**
der elektrische Antrieb (6) eine Motor-Getriebe-Kombination ist.

10. Fahrzeugsitz nach einem der vorhergehenden Ansprüche,
**dadurch gekennzeichnet, dass**
der elektrischer Antrieb (6) in der Nähe eines Endes (8) einer Drehachse (7) positioniert und in der Rükkenlehne (3) oder mindestens einem Rückenlehnenteil (4, 5) integriert ist.

## Claims

1. Vehicle seat (1), in particular rear seat or rear seat bench, having a seat part (2) and having a backrest (3) which has a foldover function brought about with an electric drive, the foldover function bringing about a folding over of the backrest (3) or of a backrest part (4, 5) relative to the seat part (2), **characterized in that** the electric drive (6) has an inclination-adjusting function, it being possible for the adjusting speed of the electric drive (6) to be changed in such a manner that a different speed can be set in each case for the inclination-adjusting function and for the foldover function, and the seat part (2) has at least one seat occupation sensor (13) and the seat occupation sensor (13) is functionally connected to the electric drive (6) in such a manner that, when the seat is occupied, the foldover function is blocked while the inclination-adjusting function is not blocked.

2. Motor vehicle seat according to Claim 1, **characterized in that** the drive (6) has two adjusting speeds, a higher speed being provided for the foldover function and a lower speed being provided for the inclination-adjusting function.

3. Motor vehicle seat according to one of the preceding claims, **characterized in that** the foldover function and the inclination-adjusting function each have a dedicated adjusting characteristic.

4. Motor vehicle seat according to one of the preceding claims, **characterized in that** the inclination of the backrest (3) can be changed in the inclination-adjusting function by the electric drive (6) in a stepwise manner - in particular with a stepping motor.

5. Motor vehicle seat according to one of the preceding claims, **characterized in that** the electric drive (6) has an electric motor (9) which is common to all of the adjusting functions.

6. Motor vehicle seat according to one of the preceding claims, **characterized in that** the electric drive (6) has an electronic or mechanical torque limitation.

7. Motor vehicle seat according to one of the preceding claims, **characterized in that,** in the foldover function, the electric drive (6) can be actuated from the passenger compartment - preferably from the seat and/or from the dashboard - by a first operating switch (11), and can be actuated from the trunk by a second operating switch (12) and, in the inclination-adjusting function, can be actuated from the seat - in particular from the front seat region.

8. Motor vehicle seat according to one of the preceding claims, **characterized in that** the backrest (3) or one or more backrest parts (4, 5) can be folded over by wireless remote control.

9. Motor vehicle seat according to one of the preceding claims, **characterized in that** the electric drive (6) is a combination of a motor and transmission.

10. Motor vehicle seat according to one of the preceding claims, **characterized in that** the electric drive (6) is positioned in the vicinity of one end (8) of an axis of rotation (7) and is integrated in the backrest (3) or at least a backrest part (4, 5).

## Revendications

1. Siège de véhicule automobile (1), notamment siège arrière ou banquette de siège arrière, comprenant une partie de siège (2) et un dossier (3), qui présente une fonction de rabattement provoquée par une commande électrique, la fonction de rabattement provoquant un rabattement du dossier (3) ou d'une partie du dossier (4, 5) par rapport à la partie de siège (2),
**caractérisé en ce que**
la commande électrique (6) présente une fonction de réglage de l'inclinaison, la vitesse de réglage de la commande électrique (6) pouvant être modifiée de telle sorte que pour la fonction de réglage de l'inclinaison et pour la fonction de rabattement, une vitesse différente puisse à chaque fois être ajustée, et la partie de siège (2) présente au moins un capteur d'occupation du siège (13) et le capteur d'occupation du siège (13) est connecté fonctionnellement à la commande électrique (6) de telle sorte que lors de l'occupation du siège, la fonction de rabattement soit bloquée, tandis que la fonction de réglage de l'inclinaison n'est pas bloquée.

2. Siège de véhicule automobile selon la revendication 1,
**caractérisé en ce que**
la commande (6) présente deux vitesses de réglage, une vitesse supérieure étant prévue pour la fonction de rabattement et une vitesse inférieure étant prévue pour la fonction de réglage de l'inclinaison.

3. Siège de véhicule automobile selon l'une quelconque des revendications précédentes,
**caractérisé en ce que**
la fonction de rabattement et la fonction de réglage de l'inclinaison présentent à chaque fois une caractéristique de réglage propre.

4. Siège de véhicule automobile selon l'une quelconque des revendications précédentes,
**caractérisé en ce que**
l'inclinaison du dossier (3) dans la fonction de réglage de l'inclinaison peut être modifiée pas à pas - notamment avec un moteur pas à pas - par la commande électrique (6).

5. Siège de véhicule automobile selon l'une quelconque des revendications précédentes,
**caractérisé en ce que**
la commande électrique (6) présente un moteur électrique (9) commun pour toutes les fonctions de réglage.

6. Siège de véhicule automobile selon l'une quelconque des revendications précédentes,
**caractérisé en ce que**
la commande électrique (6) présente une limitation de couple électronique ou mécanique.

7. Siège de véhicule automobile selon l'une quelconque des revendications précédentes,
**caractérisé en ce que**
dans la fonction de rabattement, la commande électrique (6) peut être actionnée par un premier commutateur de commande (11) depuis le compartiment passager - de préférence depuis le siège et/ou depuis le tableau de bord, par un deuxième commutateur de commande (12) depuis le coffre, et, dans la fonction de réglage de l'inclinaison, depuis le siège - en particulier depuis la région de siège avant.

8. Siège de véhicule automobile selon l'une quelconque des revendications précédentes,
**caractérisé en ce que**
le dossier (3) ou une ou plusieurs parties de dossier (4, 5) peuvent être rabattus par une commande à distance sans fil.

9. Siège de véhicule automobile selon l'une quelconque des revendications précédentes,
**caractérisé en ce que**
la commande électrique (6) est une combinaison de moteur et de transmission.

10. Siège de véhicule automobile selon l'une quelconque des revendications précédentes,
**caractérisé en ce que**
la commande électrique (6) est positionnée à proximité d'une extrémité (8) d'un axe de rotation (7) et est intégrée dans le dossier (3) ou au moins dans une partie de dossier (4, 5).
